# EUROPEAN PATENT SPECIFICATION

(11) **EP 2 810 901 B1**
(45) Date of publication and mention of the grant of the patent: **30.03.2016**
(21) Application number: 14171518.5
(22) Date of filing: 06.06.2014
(51) Int. Cl.: B65G 47/91

(54) **Product suction device**
Sauggreifer für Gegenstände
Appareil de préhension d'objets par dépression

(30) Priority: 07.06.2013 NL 2010931
(43) Date of publication of application: 10.12.2014
(73) Proprietor: Irmato Holding Veghel B.V., 6039 RA Stramproy (NL)
(72) Inventor: Ilmer, Wilhelmus Antonius Maria, 6039 RA STRAMPROY (NL); Nouwens, Tim, 6039 RA STRAMPROY (NL)
(74) Representative: Algemeen Octrooi- en Merkenbureau B.V.

(56) References cited:
- EP-A1- 0 043 117
- EP-A1- 0 520 910
- US-A1- 2008 265 595
- US-A1- 2012 243 950

## Description

### FIELD OF THE INVENTION

The invention relates to a product suction device and a method and a product suction system for grasping a product, using an underpressure.

### PRIOR ART

The product suction device comprises an suction channel provided with a suction cavity and a suction cup provided with a suction cup cavity, which is connected to the suction channel. Provided at a free side of the suction cup is a suction opening for making contact with a product. The invention further relates to a method for handling a product, using a product suction device, wherein contact is made with the product via the suction opening of the product suction device, creating an underpressure in relation to the ambient pressure in the connection channel of the product suction device, so that the product is sucked against the suction opening, removing the underpressure in the connection channel, so that the product is released from the suction opening.

Product suction devices for sucking up or engaging products or objects, using an underpressure, are known in the art. Said devices comprise a suction cup provided with a suction opening. The suction opening is placed on a product to be sucked up, whereupon an underpressure is generated in a suction cup cavity formed by the suction cup and the suction opening being closed by the product. After being sucked up, the product can be moved or processed. The product is released again by substituting the underpressure for ambient pressure. Many applications exist, for example in the food products industry.

European patent publication no. 0520910 discloses a product suction device according to the preamble of claim 1. A problem that occurs with the known device as disclosed in European patent publication no. 0520910 is that particles may accumulate on the outer side of the filter wall, resulting in a clogging of the device.

A problem that occurs in the handling of products having an outer layer that is loose or can be released, for example products coated with breadcrumbs, by means of prior art suction devices is that material released from the outer layer is sucked into the connection channel by the underpressure, which may lead to fouling and clogging.

Accordingly it is an object of the invention to provide a product suction device that eliminates the aforesaid drawbacks.

### SUMMARY

This object is achieved with a product suction device for grasping a product, using an underpressure in accordance with claim 1. The product suction device comprises an suction channel, which forms a suction cavity at the end thereof, a suction cup connected to the suction channel at the suction cavity, which suction cup comprises a suction cup cavity and a suction opening provided at a free side of the suction cup.

The product suction device further comprises a filter element provided on the inner side of the suction cup, over the suction cavity, at the end of the suction channel, which filter element has a porous filter wall suitable for making it possible to realise a suction effect in the suction cup cavity in use by creating an underpressure in the suction channel. The filter prevents particles from penetrating into the connection channel and further.

The product suction device further comprises a medium inlet provided near the end of the suction channel and the filter element, and a medium supply system that connects the medium inlet to the suction cavity near the end of the suction channel and the filter element.

This makes it possible to introduce a medium without using the connection channel, making it possible to realise an overpressure on the inner side of the filter wall, so that particles that have accumulated on the outer side of the filter wall can be discharged in the direction of the suction cup. The advantage of this is that the building up of an underpressure via the connection channel can continue, whilst the medium is provided (for example briefly) on the inner side of the filter wall. Any loose particles on the outer side of a product to be sucked up, which particles may be sucked in by the underpressure in the suction cup, are now caught by the filter wall.

In an embodiment, the filter extends in the direction of the suction opening, making it possible to create a relatively large filter wall area, so that openings in the filter wall that render the filter wall porous can be very small in relation to the loose particles that may be sucked in, whiles a sufficient suction effect from the product suction device is ensured.

In an embodiment, the filter wall extends cylindrically in the suction cup cavity. The advantage of this is that such a filter is relatively easy to produce from a tubular or cylindrical material for the filter wall.

In another embodiment, the filter wall extends tapered into the suction cup cavity. The advantage of this is that such a filter wall combines the advantages of the relatively large area and allows the filter to be cleaned, wherein particles that are blown off from the filter wall during the cleaning step are blown off with a direction component towards the suction opening.

In one embodiment, the connection channel comprises a plurality of medium channels, which are connected to the medium inlet via a common supply channel. A medium being supplied can thus be evenly distributed on the inner side of the filter wall.

In another embodiment, the at least one medium channel is oriented such that a medium flowing from the at least one medium channel will flow against an inner side of the filter wall. The medium will thus hit the inner side of the filter wall directly, so that cleaning can take place more effectively from the inside.

In another embodiment, the at least one medium channel extends tangentially from the medium inlet to the suction cavity, so that a medium flowing out will hit the inner side of the filter wall at an oblique angle. This achieves that the medium flowing out will spare, or cause no damage to, the inner filter wall surface, whilst an effective cleaning effect is retained.

In one embodiment, the filter wall includes an oblique angle with a centre line through the filter. This makes it possible to obtain an optimum cleaning effect of the filter.

According to another aspect of the invention, the object is also achieved with a method for handling a product, using a product suction device as described above. The term "handling" is understood to mean the sucking up and releasing of a product. The method comprises making contact with the product via the suction opening of the product suction device, creating an underpressure in the connection channel of the product suction device, so that the product is sucked against the suction opening, and removing the underpressure in the connection channel, so that the product is released by the suction opening. The step of removing the underpressure comprises the step of creating an overpressure in the suction cavity of the product suction device. The overpressure makes it possible to discharge particles that have accumulated on the outer side of the filter wall of the filter or that clog the pores of the filter wall.

In one embodiment, the step of creating an overpressure can be carried out during a period in time.

In another embodiment, the overpressure is produced by injecting a medium via the medium inlet. This makes it possible to maintain the underpressure in the connection channel, whilst a medium which provides the overpressure for cleaning the filter is introduced via a separate route.

In one embodiment, the overpressure preferably ranges between 550,000 and 800,000 Pascal.

According to another aspect of the invention, the object is also achieved with a product suction system comprising a product suction device as described above and a suction means connected to the suction channel, said suction means being adapted for building up an underpressure in the suction channel. In one embodiment, the suction means is also adapted for building up an overpressure in the suction channel.

### BRIEF DESCRIPTION OF THE DRAWINGS

Figure 1 is a cross-sectional view of the product suction device according to an embodiment of the invention.
Figure 2a is a cross-sectional view along the line A-A' in figure 1 of a filter element of the product suction device.
Figure 2b is a side view of the filter element of figure 2a.
Figure 3 is a block diagram showing a method according to an embodiment of the invention.

### DETAILED DESCRIPTION OF EMBODIMENTS

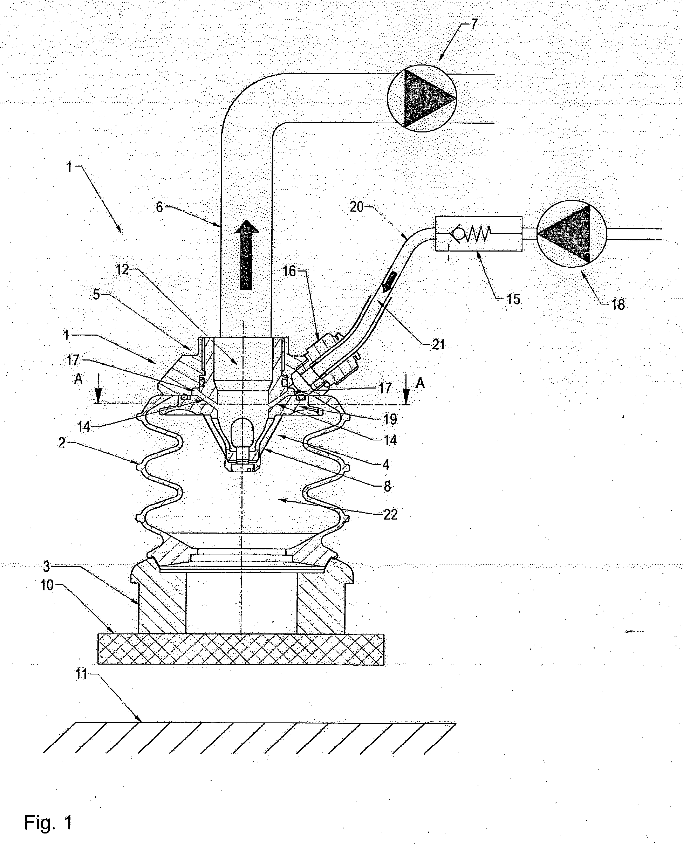

Figure 1 shows an exemplary embodiment of a product suction device 1 according to the invention. Together with a vacuum generator 7, and a medium pressure generator 18 in one embodiment, the product suction device 1 forms a product suction system as shown also in figure 1. A so-called vacuum cartridge can be used as the vacuum generator, for example, as can a suitable vacuum pump or a vacuum reservoir, wherein an underpressure low enough for the product suction device 1 to engage a product must be generated. A suitable pump, for example a compressed air pump or a compressed air reservoir, can function as the medium pressure generator.

The product suction device 1 comprises a suction channel 6, to which a suction cup 2 is attached. To attach the suction cup 2 to the suction channel 6, the end of the suction channel 6 can be configured as a support ring 5 or be provided with a support ring 5. The support ring 5 can be annular in shape and be made of a plastic material or a metal. The support ring 5 can be connected to an arm, for example, and be used for spatial movement of the product suction device 1. The support ring 5 can also be left out.

The suction channel 6 can be made up of a hose or pipe, for example, in which an underpressure which is strong enough for the product suction device 1 to lift a product 10 from a surface 11, using suction force, can be built up by means of the vacuum generator 7. At the end of the suction channel 6, a filter element 4 having a filter wall 8 is provided, forming a suction cavity 12 that is in communication with the suction channel 6. The filter wall 8 forms a barrier for sucked-up particles between the suction cavity 12 and the suction cup cavity 22. The filter element 4 can be connected to the support ring 5, for example via an insert 19. The filter wall 8 is preferably connected to the insert 19, forming a filter element 4 that can be inserted into the support ring 5. Alternatively, the filter wall 8 can be connected directly to the end of the suction channel 6 or to the support ring 5. The filter wall 8 is porous to a suitable medium, for example air, and comprises air- or medium-permeable pores or openings.

The suction cup 2 can be made up of a flexible material or a hard material, such as rubber or a suitable flexible plastic material, for example, or a solid, hard plastic material or a metal, respectively. The suction cup 2 can be configured as a bellows, for example, as shown in figure 1. At one end, the suction cup 2 is connected to the end of the suction channel 6, whilst an opening on the opposite side functions as a suction opening 3, by means of which products 10 can be sucked up. In order to improve the engagement with a product, so that little air or no air is sucked into the suction cup cavity when an underpressure is created in the suction device, the suction opening 3 can further be provided with a liner of a soft material, which is attached to the opening of the suction cup 2, as shown in figure 1.

When a product 10 to be sucked up is moved in front of the suction opening 3 of the product suction device 1, an underpressure is created in the suction cavity 12 as a result of air being exhausted by the vacuum generator 7. Subsequently an underpressure is created in the suction cup cavity 22 via the filter wall 8 of the filter element 4. When the underpressure in the suction cup cavity 22 and the suction opening 3 and the product 10 is sufficient, the product 10 can be lifted from a surface 11.

The vacuum generator 7 can be configured such that when the product 10 is to be released from the suction opening 3 of the product suction device 1 again, the pressure in the suction cup cavity 22 is brought back to the ambient pressure of the product suction device, for example by deactivating the vacuum generator. The underpressure that has been created in the suction cup cavity 22 will then disappear due to leakage along the product as a result of the suction channel 6 being brought into contact with the ambient pressure, and the pressure in the suction cup cavity will be insufficient for holding the product 10 any longer. Alternatively, a valve can be provided from the suction channel 6 to the environment, such that air can enter the suction channel after opening of the valve, so that the underpressure is released.

By changing or reversing the flow of the vacuum generator 7 and building up an overpressure in the suction channel 6, any particles that may have been released from the product 10, which particles have found their way onto the outer side of the filter wall 8 as a result of the suction effect and have accumulated there, can subsequently be blown off the filter wall 8. It is obvious that a person skilled in the art can find a suitable solution to this: It is for example possible to use a two-direction pump for the vacuum generator 7 and reversing the pump direction at suitable moments. Using valves, it is also possible to switch or reverse the pump direction so that an underpressure is built up in the suction channel 6 in a first state and an overpressure is built up in the suction channel 6 in a second state. In a third state, in which the vacuum generator 7 is inactive, for example, the underpressure is released, for example by admitting ambient pressure in the suction channel 6, wherein possibly the suction channel can be connected to air or another medium having ambient pressure, using an additional valve. In some situations, for example in the case of sticky products, it may be necessary to build up a slight overpressure so as to facilitate the releasing of the product.

In one embodiment of the invention, a medium inlet 16 is provided at the end of the suction channel 6, which makes it possible to introduce a medium 21 into the suction cavity 12 via a connection channel system 17, 14. The connection channel 17 can be annularly provided round the support ring 5 and the filter insert 19, for example, in which case the medium 21 can reach the suction cavity 12 via one or more further channels 14, which are in communication with the connection channel 17. The medium 21 is supplied via a medium channel 20 and pressurised by the medium pressure generator 18; optionally it can be introduced into the medium channel 20 via a (for example air-controlled) valve 15, such that the medium 21 is only forced into the medium channel 20 if a sufficient overpressure is present on the pressure side of the valve 15.

In use, the medium 21 is supplied to the medium inlet 16 under high pressure, such that an overpressure is thus created in the suction cavity 12, causing the filter wall 8 to be cleaned in that the medium 21 passes through the filter wall 8 to the cavity 22 in the suction cup cavity 22, carrying along any particles that may have accumulated on the filter wall 8.

The medium 21 can be air or another suitable gas, for example carbon dioxide gas or nitrogen. This achieves that the volume of the suction channel 6 is no longer critical to the operation of the product suction device. After all, if the engaging of a product 10 and the releasing of said product and the blow-cleaning of the filter wall 8 only takes place via the suction channel 6, an underpressure must be built up in the suction channel 6 each time to obtain suction, and an overpressure must be built up for blow-cleaning, in which regard it will be understood that the greater the volume of the suction channel 6 the more air or whatever medium that can be present in the suction channel 6 needs to be displaced in order to go through the entire operating cycle.

By using the medium inlet 16 and introducing the medium 21 into the suction cavity 12, an overpressure of the medium can thus be briefly built up in the suction cavity 12, separately from the operation of the vacuum generator 7. Creating a brief, slight overpressure of the medium 21 in the suction cavity 12 enables reduction of the underpressure in the cavity 22 of the suction cup cavity 22 so as to release the product 10 again. A brief, greater overpressure can then be used to clear the filter wall 8 of accumulated particles as described above. The steps of releasing and cleaning can be combined by applying a greater overpressure in one go.

A suitable overpressure for releasing a product 10 ranges between 100,000 and 300,000 Pascal. To obtain an effective cleaning of the filter wall 8, the pressure or pressure pulse preferably ranges between 550,000 and 800,000 Pascal. To obtain an optimal cleaning effect of the filter wall 8, it can furthermore be advantageous to repeat the pressure pulse a number of times.

In one application, in which the product suction device 1 is used in combination with an arm for picking up a product 10 from a surface 11 and move it to another location, the pressure pulse for cleaning the filter wall 8 can be applied during return movement or at a specific location, so that accumulated particles can be left behind at that location.

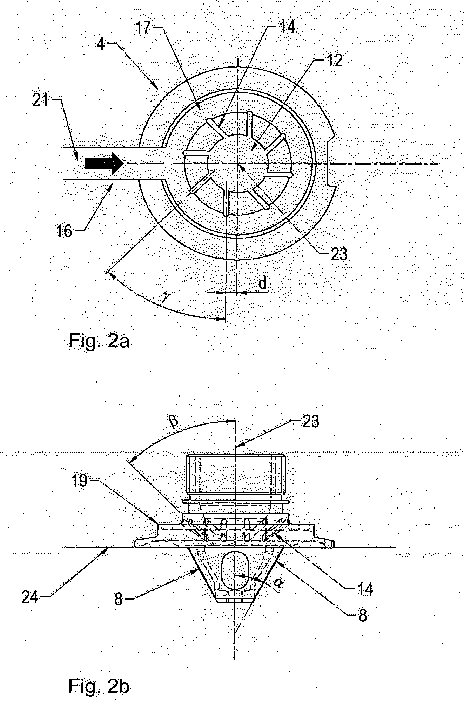

Figure 2a shows a horizontal section along the line A-A' of the product suction device of figure 1. There is shown a plurality of medium channels 14, which are in communication with the common supply channel 17, which in turn is in communication with the medium inlet 16. Via the medium channels 14, the medium is introduced into the suction cavity 12. The medium channels 14 are provided eccentrically relative to a centre line 23 perpendicular to the plane of drawing of the filter element 4, wherein the medium channel 14 is tangentially oriented, possibly offset by a distance d relative to a centre line 23 of the filter, and wherein the medium channels 14 can include an angle γ with each other. The term "oriented tangentially" means that an imaginary line through the connection channel 14 touches a likewise imaginary circle having a radius different from zero around the centre 23.

Figure 2b shows the filter wall 8, which exhibits an angle α relative to a centre line 23 through the filter element 4, and medium channels 14, which can extend at an angle β relative to the centre line 23 in the direction of the filter wall 8, such that the angle β - α is the angle at which the medium being introduced will hit the inner surface of the filter wall 8. The angles α and β are preferably selected such that the difference β - α is different from a right angle, so that the introduced medium will hit the inner surface at an oblique angle. As a result of the eccentric orientation with offset d of the medium channels 14, a rotary motion of the introduced medium 21 is furthermore obtained, such that an overpressure is created on the inner side of the filter wall 8, to be true, but the inner surface of the filter wall is also spared from erosion caused by the introduced medium. If the channels 14 were to be oriented perpendicular to the inner surface of the filter wall 8, erosion of said inner surface might occur as a result of the frictional, scouring effect of the medium.

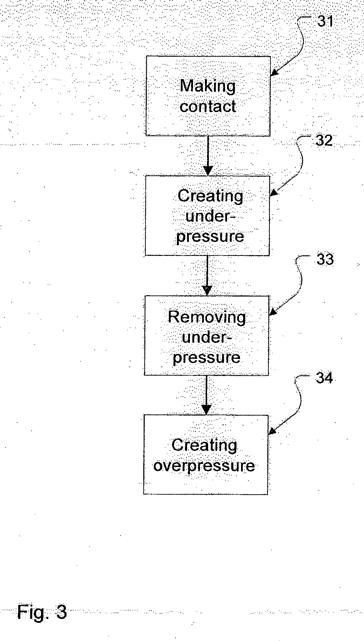

In figure 3 there is shown a block diagram of an embodiment of a method according to the invention. In step 31, the suction opening 3 of the suction cup 2 of a product suction device 1 as described above is brought into contact with a product to be handled. The suction opening 3 is positioned on or over the product in such a manner that it is closed by the product. In step 32 an underpressure is subsequently built up in the suction channel 6. Said underpressure propagates into the suction cup cavity 22, so that the product is sucked against the suction opening 3. At this stage an operation can be carried out with the product, for example a product treatment or a movement, for example of a product carrier on a conveying system or vice versa, or a combination thereof.

When an underpressure is generated in the product suction device 1, or suction is carried out, particles present on the outer side of the product can be sucked in by the product suction device 1. Said particles are then sucked against the filter wall in the suction cup cavity 22 and/or clog pores in the filter wall 8. In the case of meat products said particles can be breadcrumbs, for example. In step 33 the underpressure in the product suction device 1 is removed, so that the product 10 is released and becomes detached from the suction opening 3. Removing the underpressure, and thus releasing the product 10, can optionally take place by bringing the product suction device 1 to ambient pressure or by creating a slight overpressure. The removing of the underpressure in step 34 comprises the creating of an overpressure in the product suction device 1. Also then of course the product 10 is released. However, as a result of the overpressure that is transferred to the filter wall 8 from the suction cavity 12 and the accompanying medium flow from the suction cavity 12 to the suction cup cavity 22, particles that have accumulated on the suction cup side of the filter wall 8 or in the filter pores are blown off said filter wall or out of said filter pores.

Several variations and modifications of the exemplary embodiments described in the foregoing are possible without limiting the scope of the appended claims.

## Claims

1. A product suction device (1) for grasping a product (10), using an underpressure, comprising:
an suction channel (6), which forms a suction cavity (12) at an end thereof;
a suction cup (2) connected to the suction channel (6) at the suction cavity (12), which suction cup (2) comprises a suction cup cavity (22) and a suction opening (3) provided at a free side of the suction cup (2);
wherein the product suction device (1) further comprises
a filter element (4) provided on the inner side of the suction cup (2), over the suction cavity (12), at the end of the suction channel (6),
which filter element (4) has a porous filter wall (8) suitable for realising a suction effect in the suction cup cavity (22) in use by creating an underpressure in the suction channel (6),
**characterised in that**
the product suction device (1) further comprises a medium inlet (16), and
a medium supply system (17, 14) which connects the medium inlet (16) to the suction cavity (12) near the end of the suction channel and the filter element (4).

2. A product suction device (1) according to claim 1, wherein the filter wall (8) extends into the suction cup cavity (22).

3. A product suction device (1) according to claim 2, wherein the filter wall (8) extends conically into the suction cup cavity (22).

4. A product suction device (1) according to any one of the preceding claims, wherein the medium supply system (17, 14) comprises a plurality of medium channels (14), which are connected to the medium inlet (16) via a common supply channel (17) and which open into the suction cavity (12).

5. A product suction device (1) according to claim 4, wherein the at least one medium channel (14) is oriented so that a medium flowing from the at least one medium channel will flow against an inner side of the filter wall (8) at an angle (β - α) different from a right angle.

6. A product suction device (1) according to claim 5, wherein the at least one medium channel (14) extends from the medium inlet to the suction cavity (12), being tangentially oriented and offset by a distance (d) relative to a centre line (23) of the filter element (4), so that a medium (21) flowing out will hit the inner side of the filter wall (8) at an oblique angle.

7. A method for handling a product (10), using a product suction device (1) according to any one of claims 1 - 6, comprising
making contact with the product (10) via the suction opening (3) of the product suction device (1);
creating an underpressure (32) in the suction cup cavity (22) of the product suction device (1), so that the product (10) is sucked against the suction opening (3);
removing the underpressure (33) in the suction cup cavity (22), so that the product (10) is released from the suction opening (3);
**characterised in that** the step of removing the underpressure (33) comprises
creating an overpressure (34) in the suction cavity (12) of the product suction device (1) for cleaning the filter surface (8).

8. A method according to claim 7, wherein the step of creating an overpressure comprises the creating of an overpressure out during a period in time.

9. A method according to claim 7 or 8, wherein the step of creating an overpressure comprises introducing a medium (21) via the medium inlet (16), using an overpressure.

10. A method according to claim 9, wherein the medium (21) is introduced at an angle (β), being tangentially oriented and being offset by a distance (d) relative to the inner surface of the filter wall (8).

11. A method according to any one of claims 7 - 10, wherein the overpressure preferably ranges between 550,000 and 800,000 Pascal.

12. A product suction system **characterised by** a product suction device (1) according to any one of claims 1 - 6 and a suction means (7) connected to the suction channel (6), wherein the suction means (7) is adapted for building up an underpressure in the suction channel (6).

13. A product suction system according to claim 12, wherein the suction means is also adapted for building up an overpressure in the suction channel (6).

14. A product suction system according to any one of claims 12 - 13, further comprising medium introducing means (18, 20) for introducing a medium under pressure into the medium inlet of the product suction device (1).

## Patentansprüche

1. Eine Produktansaugvorrichtung (1) zum Greifen eines Produktes (10) unter Nutzung eines Unterdrucks, umfassend:
- einen Saugkanal (6), der an seinem Ende einen Saugraum (12) bildet;
- einen Saugnapf (2), der an dem Saugraum (12) mit dem Saugkanal (6) verbunden ist, wobei der Saugnapf (2) einen Saugnapfhohlraum (22) und eine an einer freien Seite des Saugnapfes (2) vorgesehene Saugöffnung (3) aufweist;
wobei die Produktansaugvorrichtung (1) ferner ein Filterelement (4) umfasst, das an der Innenseite des Saugnapfes (2) vorgesehen ist, über dem Saugraum (12), am Ende des Saugkanals (6),
wobei das Filterelement (4) eine poröse Filterwand (8) aufweist, die geeignet ist, im Gebrauch eine Saugwirkung in dem Saugnapfhohlraum (22) durch das Erzeugen eines Unterdrucks in dem Saugkanal (6) zu realisieren,
**dadurch gekennzeichnet, dass**
die Produktansaugvorrichtung (1) ferner einen Mediumeinlass (16) und ein Mediumversorgungssystem (17, 14), welches den Mediumeinlass (16) mit dem Saugraum (12) nahe dem Ende des Saugkanals und dem Filterelement (4) verbindet, umfasst.

2. Eine Produktansaugvorrichtung (1) nach Anspruch 1, wobei die Filterwand (8) sich in den Saugnapfhohlraum (22) erstreckt.

3. Eine Produktansaugvorrichtung (1) nach Anspruch 2, wobei die Filterwand (8) sich kegelförmig in den Saugnapfhohlraum (22) erstreckt.

4. Eine Produktansaugvorrichtung (1) nach einem der vorhergehenden Ansprüche, wobei das Mediumversorgungssystem (17, 14) eine Vielzahl von Mediumkanälen (14) umfasst, welche über einen gemeinsame Versorgungskanal (17) mit dem Mediumeinlass (16) verbunden sind und welche sich in den Saugraum (12) öffnen.

5. Eine Produktansaugvorrichtung (1) nach Anspruch 4, wobei der zumindest eine Mediumkanal (14) derart ausgerichtet ist, dass ein Medium, das aus dem zumindest einen Mediumkanal strömt, gegen eine Innenseite der Filterwand (8) in einem von einem rechten Winkel abweichenden Winkel (β - α) strömen wird.

6. Eine Produktansaugvorrichtung (1) nach Anspruch 5, wobei der zumindest eine Mediumkanal (14) sich von dem Mediumeinlass zu dem Saugraum (12) erstreckt, wobei dieser tangential ausgerichtet und durch einen Abstand (d) versetzt zu einer Mittellinie (23) des Filterelements (4) ist, so dass ein herausströmendes Medium (21) die Innenseite der Filterwand (8) in einem schrägen Winkel treffen wird.

7. Verfahren zur Handhabung eines Produktes (10) unter Verwendung einer Produktansaugvorrichtung (1) nach einem der Ansprüche 1 - 6, umfassend:
- Herstellen eines Kontakts mit dem Produkt (10) über die Saugöffnung (3) der Produktansaugvorrichtung (1);
- Erzeugen eines Unterdrucks (32) in dem Saugnapfhohlraum (22) der Produktansaugvorrichtung (1), so dass das Produkt (10) gegen die Saugöffnung (3) gesaugt wird;
- Entfernen des Unterdrucks (33) in dem Saugnapfhohlraum (22), so dass das Produkt (10) von der Saugöffnung (3) freigegeben wird;
**dadurch gekennzeichnet, dass**
der Schritt des Entfernens des Unterdrucks (33) das Erzeugen eines Überdrucks (34) in dem Saughohlraum (12) der Produktansaugvorrichtung (1) zur Reinigung der Filterfläche (8) umfasst.

8. Verfahren nach Anspruch 7, wobei der Schritt des Erzeugens eines Überdrucks das Erzeugen eines Überdrucks während einer Zeitdauer umfasst.

9. Verfahren nach Anspruch 7 oder 8, wobei der Schritt des Erzeugens eines Überdrucks das Einführen eines Mediums (21) über den Mediumeinlass (16) unter Nutzung eines Überdrucks umfasst.

10. Verfahren nach Anspruch 9, wobei das Medium (21) in einem Winkel (β) eingebracht wird, wobei es tangential ausgerichtet und durch einen Abstand (d) gegenüber der inneren Oberfläche der Filterwand (8) versetzt ist.

11. Verfahren nach einem der Ansprüche 7 - 10, wobei der Überdruck vorzugsweise im Bereich zwischen 550.000 und 800.000 Pascal liegt.

12. Ein Produktansaugsystem **gekennzeichnet durch** eine Produktansaugvorrichtung (1) nach einem der Ansprüche 1 - 6 und ein Saugmittel (7), das mit dem Saugkanal (6) verbunden ist, wobei das Saugmittel (7) für den Aufbau eines Unterdrucks im Saugkanal (6) eingerichtet ist.

13. Ein Produktansaugsystem nach Anspruch 12, wobei das Saugmittel auch für den Aufbau eines Überdrucks im Saugkanal (6) eingerichtet ist.

14. Ein Produktansaugsystem nach einem der Ansprüche 12 - 13, ferner umfassend ein Mediumeinführungsmittel (18, 20) zum Einführen eines Mediums unter Druck in den Mediumeinlass der Produktansaugvorrichtung (1).

## Revendications

1. Dispositif d'aspiration de produit (1) pour saisir un produit (10), en utilisant une sous pression, comprenant :
un canal d'aspiration (6), qui forme une cavité d'aspiration (12) au niveau d'une extrémité de celui-ci ;
une ventouse (2) reliée au canal d'aspiration (6) au niveau de la cavité d'aspiration (12), laquelle ventouse (2) comprend une cavité de ventouse (22) et une ouverture d'aspiration (3) prévue sur un côté libre de la ventouse (2) ;
dans lequel le dispositif d'aspiration de produit (1) comprend en outre
un élément de filtre (4) prévu sur le côté interne de la ventouse (2), sur la cavité d'aspiration (12), au niveau de l'extrémité du canal d'aspiration (6),
lequel élément de filtre (4) a une paroi de filtre poreuse (8) appropriée pour assurer un effet d'aspiration dans la cavité de ventouse (22) lors de l'utilisation en créant une sous pression dans le canal d'aspiration (6),
**caractérisé en ce que**
le dispositif d'aspiration de produit (1) comprend en outre une entrée de milieu (16), et
un système d'alimentation en milieu (17, 14) qui relie l'entrée de milieu (16) à la cavité d'aspiration (12) près de l'extrémité du canal d'aspiration et de l'élément de filtre (4).

2. Dispositif d'aspiration de produit (1) selon la revendication 1, dans lequel la paroi de filtre (8) s'étend dans la cavité de ventouse (22).

3. Dispositif d'aspiration de produit (1) selon la revendication 2, dans lequel la paroi de filtre (8) s'étend de manière conique dans la cavité de ventouse (22).

4. Dispositif d'aspiration de produit (1) selon l'une quelconque des revendications précédentes, dans lequel le système d'alimentation en milieu (17, 14) comprend une pluralité de canaux de milieu (14), qui sont reliés à l'entrée de milieu (16) par l'intermédiaire d'un canal d'alimentation commun (17) et qui débouchent dans la cavité d'aspiration (12).

5. Dispositif d'aspiration de produit (1) selon la revendication 4, dans lequel l'au moins un canal de milieu (14) est orienté de sorte qu'un milieu s'écoulant à partir de l'au moins un canal de milieu s'écoulera contre un côté interne de la paroi de filtre (8) selon un angle (β - α) différent d'un angle droit.

6. Dispositif d'aspiration de produit (1) selon la revendication 5, dans lequel l'au moins un canal de milieu (14) s'étend à partir de l'entrée de milieu à la cavité d'aspiration (12) étant orienté tangentiellement et décalé d'une distance (d) par rapport à une ligne médiane (23) de l'élément de filtre (4), de sorte qu'un milieu (21) sortant frappera le côté interne de la paroi de filtre (8) selon un angle oblique.

7. Procédé pour manipuler un produit (10), en utilisant un dispositif d'aspiration de produit (1) selon l'une quelconque des revendications 1 à 6, comprenant le fait
d'entrer en contact avec le produit (10) par l'intermédiaire de l'ouverture d'aspiration (3) du dispositif d'aspiration de produit (1) ;
de créer une sous-pression (32) dans la cavité de ventouse (22) du dispositif d'aspiration de produit (1), de sorte que le produit (10) soit aspiré contre l'ouverture d'aspiration (3) ;
d'éliminer la sous-pression (33) dans la cavité de ventouse (22), de sorte que le produit (10) soit libéré de l'ouverture d'aspiration (3) ;
**caractérisé en ce que** l'étape d'élimination de la sous-pression (33) comprend le fait
de créer une surpression (34) dans la cavité d'aspiration (12) du dispositif d'aspiration de produit (1) pour nettoyer la surface de filtre (8).

8. Procédé selon la revendication 7, dans lequel l'étape de création d'une surpression comprend la création d'une surpression pendant une période de temps.

9. Procédé selon la revendication 7 ou 8, dans lequel l'étape de création d'une surpression comprend le fait d'introduire un milieu (21) par l'intermédiaire de l'entrée de milieu (16), en utilisant une surpression.

10. Procédé selon la revendication 9, dans lequel le milieu (21) est introduit selon un angle (β), étant orienté de manière tangentielle et étant décalé d'une distance (d) par rapport à la surface interne de la paroi de filtre (8).

11. Procédé selon l'une quelconque des revendications 7 à 10, dans lequel la surpression est de préférence comprise entre 550000 et 800000 Pascal.

12. Système d'aspiration de produit **caractérisé par** un dispositif d'aspiration de produit (1) selon l'une quelconque des revendications 1 à 6 et un moyen d'aspiration (7) relié au canal d'aspiration (6), où le moyen d'aspiration (7) est adapté pour établir une sous-pression dans le canal d'aspiration (6).

13. Système d'aspiration de produit selon la revendication 12, dans lequel le moyen d'aspiration est également adapté pour établir une surpression dans le canal d'aspiration (6).

14. Système d'aspiration de produit selon l'une quelconque des revendications 12 à 13, comprenant en outre un moyen d'introduction de milieu (18, 20) pour introduire un milieu sous pression dans l'entrée de milieu du dispositif d'aspiration de produit (1).
